# EUROPEAN PATENT APPLICATION

(11) **EP 2 400 145 A1**
(43) Date of publication of application: **28.12.2011**
(21) Application number: 11171780.7
(22) Date of filing: 28.06.2011
(51) Int. Cl.: F03B 3/04, F03B 3/10, F03B 13/10

(54) **Fluidodynamic machine with tubed turbine, for use as an electric generator or pump**

(30) Priority: 28.06.2010 IT MI20101173
(71) Applicant: NOOR S.r.l., 54031 Avanza Carrara (MS) (IT)
(72) Inventor: Vannucci, Pier Lorenzo, 54031 AVENZA CARRARA MS (IT); Valenti, Luca, 54033 AVENZA CARRARA MS (IT)
(74) Representative: Faggioni, Marco

(57) **Abstract**

Fluidodynamic machine with tubed turbine comprising, within one or more adjoining tubular elements (T), a turbine member (1), an electric generator (5) and a mechanical axis (4) connecting a rotor (2) of said turbine member (1) and said generator (5). Turbine member (1) of said machine is of the "open" type and the rotor (2) is of the peripheral feed type with controlled inclination and axial discharge. The fluidodynamic machine is used as an electric generator or as a pump.

## Description

### FIELD OF THE INVENTION

The present invention refers to a fluidodynamic machine with tubed turbine and in particular to a machine of this type which is distinguished by the fact that the operations performed by it can be reversed, as it can be used either as a current generator or as a pump, and with fluids having different natures and features, and also with aeriforms.

For ease of description, exclusive reference will be made, below, to a turbine machine of an hydraulic type, this being the field of greatest and preferred use, although a machine with exactly the same structure, apart from the sizing factors, may also be used with gas and steam.

### PRIOR ART

Conventional turbines for generators and pumps are usually designed to suit the specific characteristics of a certain fluid current - whether they are turbines for pumps or turbines for electric generators - with the aim of achieving the highest possible performance from the hydraulic machine on which they are installed. Various designs and types of turbine (Pelton, Francis, Kaplan, Banki-Ossberger) have therefore been proposed at different times, and are widely known in the art, being designed to meet the various possible conditions of a current of water, the energy content of which one wishes to exploit.

The aforesaid conventional approach does, however, have serious limitations when the conditions of the fluid current in use are different from those envisaged at the design stage, that is, when the flow rate and hydraulic head of such a current undergo substantial variations over time. Therefore, although the conventional approach produces excellent results when the fluid current reflects the design conditions, or in any case does not depart from them to a significant extent, the hydraulic machines thus designed have very limited flexibility if the actual conditions are very different from the design ones.

This situation is particularly problematic in the case of turbines for generators or pumps for micro-plants - namely those with a power of between 1 and 250 kW, for which in particular the hydraulic turbine machine of the present invention is intended - where there is frequently a lack of precise data, on the size and constancy over time, of the fluid current which is available or to be handled. The minimum and maximum flow rates of such fluid currents may in fact vary significantly and civil works involving the collection and storage of waters - such as those which are necessarily present in large plants and which would enable the aforesaid variations to be compensated for - cannot be justified from a financial point of view.

Another sector which is not covered, and which is currently in rapid growth, is that of low-power mobile micro-plants, in which pumps and generators are used to cope with momentary requirements for energy production or movement of masses of water, in conditions which vary a great deal from time to time, as, for example, in Civil Protection activities, or temporary work establishments in areas not served by electroducts such as, for example, mountain areas.

### PROBLEM AND SOLUTION

In this frame of the known art, the Applicant has chosen to address the problem of producing an hydraulic turbine machine capable of overcoming the rigidity problems mentioned above, and which therefore shows considerable flexibility in use, even in conditions of use which may be very different from the nominal ones, whilst offering good performance compared with construction and installation costs.

Another object of the invention is to provide an hydraulic turbine machine which can work without showing any inconvenience, even in conditions which are usually regarded as unfavourable for the exploitation of a current of water for energy production purposes, i.e. in particular in the case of turbid waters, chemically aggressive waters or waters which are abrasive or encrusting due to their contents of suspended solids.

Finally, a further object of the invention is to provide an hydraulic turbine machine which is very simple and compact, easy to install and use, and with low maintenance costs.

These objects are achieved by means of an hydraulic turbine machine provided with the features defined in Claim 1. The dependent claims define other preferred features of the turbine of the invention.

### BRIEF DESCRIPTION OF THE DRAWINGS

Further characteristics and advantages of the invention will, in any case, be apparent from the following detailed description of preferred embodiments of the hydraulic turbine machine of the invention, which are provided purely by way of example and non-limitatively, and illustrated in the attached drawings, in which:
Fig. 1 is a longitudinal sectional view showing, schematically, a first embodiment of a single-stage hydraulic turbine machine of the invention, coupled to an electric generator.
Fig. 2 is a detail longitudinal sectional view of the turbine of Fig 1 only; and
Fig. 3 is a view, which is similar to Fig. 1, of a second embodiment of a multistage turbine machine of the invention.

### DETAILED DESCRIPTION OF THE PREFERRED EMBODIMENT

The Applicant's primary objective, in developing the hydraulic turbine machine of the present invention, has mainly been to make it possible, and financially advantageous, to recover the mechanical energy of a very great number of fluid currents, of the most disparate types and distributed throughout all the national territory, which currents are not currently exploited for energy production purposes, and which therefore waste an important resource of a renewable type.

As a matter of fact, machines which transform the mechanical energy of a fluid current into electrical energy are not currently available on the market - in the range of powers which are of interest in the present invention, i.e. that of micro-plants with a power of from 1 to 250 kW - which offer worthwhile performance, purchase costs which can be written off quickly enough and finally, which are easy to install and use, and may be readily used even by non-specialized users.

In speaking of fluid currents which are not exploited for energy production purposes at present, one is referring to all those "minor" currents, whether they are of natural origin or produced by human activity, for which a financially-viable means of exploitation of their energy content has not been found, to date. Such lack of exploitation may be due either to the fact that the energy content of the current is too low, in terms of head or flow rate, to justify the cost of a conventional hydroelectric plant, or to the fact that the problems in terms of environmental impact and landscaping - which a conventional plant poses to an appreciable extent, above all because of the civil engineering works required in order to create a dam or channel the waters - prevent or are an impediment to their application.

Of the "natural" currents, one can therefore list all the fresh water courses of the river and torrent type, as well as coastal marine currents or those created by wave movement. The specific objective of the invention in this case is to permit at least partial conversion of the mechanical energy contained in such water currents, by exploiting the kinetic energy alone, however, in such a way as to eliminate the requirements of conventional civil works for the damming of such currents and the resulting financial and landscaping problems.

Of the currents which are produced, on the other hand, by both previous and contemporary human-related activities, one can quote those of irrigation channels and ducts, disused mills and electric power stations, wastes from industrial processes, wastes from civil purification plants, wastes from electric power stations, wastes from industrial and civil cooling plants and similar. Finally, the hydraulic machine of the invention could conceivably be fixed to the bottom works of a water craft - after adequate study of a covering which would be functionally viable in terms of fluid dynamics, in such a way as to reduce friction losses - thereby exploiting the fluid current produced by the movement of the craft for generating electric current which can be used on board the said craft.

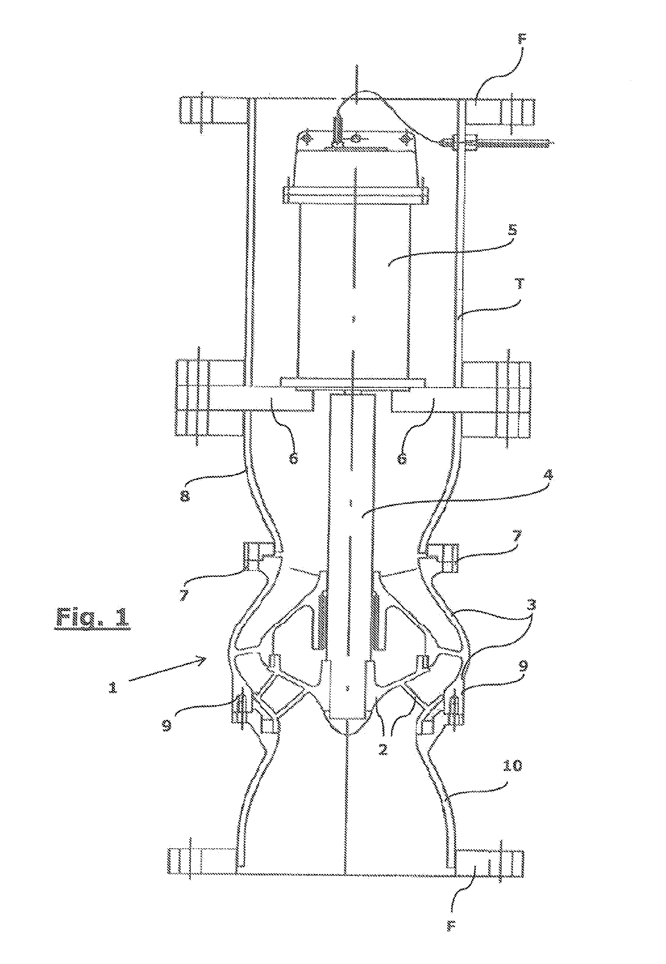

The general structure of an hydraulic turbine machine according to the present invention, is schematically-illustrated in Fig. 1, in relation to a first embodiment thereof, in which the turbine is a single-stage turbine.

The heart of the machine obviously consists of a turbine 1 which comprises a rotor 2 and a stationary feeder 3. An axial turbine shaft 4 is splined to rotor 2 which, at the opposite end, is splined to the shaft of an electric generator 5, preferably of the permanent magnet type. As can clearly be seen from Fig. 1, the turbine machine of the invention is of the "tubed" type. In other words, the various parts thereof are arranged inside one or more tubular elements T which are interconnected and fitted with terminal flanges F for connection to the suction/delivery piping of the processed fluid. The electric generator 5 is also inserted into this type of tubed structure and is therefore supported, inside a tubular element T and in an axial position thereof, by radial supporting arms 6, which in any case allow passage of the flow of fluid within tubular element T.

The tubed construction of the turbine machine has various advantages, above all in terms of the compactness and robustness of the machine, ease of connection to existing waste piping, excellent control of the temperature of the generator and the fact that the a number of different stages of the turbine can easily be modulated. The aforesaid tubed construction also permits rapid and effective use of the turbine machine of the invention into a free current, where the machine itself is submerged and anchored. In this case, it can be useful to join a feeding funnel-shaped manifold to the upstream mouth of tubular element T, which manifold is designed to convey a greater flow of current inside the turbine, and to which the anchorages of the device itself may be fixed, in order to keep it in the right trim within the current.

As is apparent from the said Fig. 1, in the turbine machine of the present invention, turbine member 1 consists in an autonomous member provided with a flange 7 connected to a suction pipe element 8 and with an opposed flange 9 - on the turbine side - connected to a delivery pipe 10. Suction and delivery pipes 8 and 10 can possibly be provided with radiused connection portions when the diameter of tubular element T is greater, as in the embodiment illustrated in Fig. 1, than that of the inlet and outlet of turbine member 1.

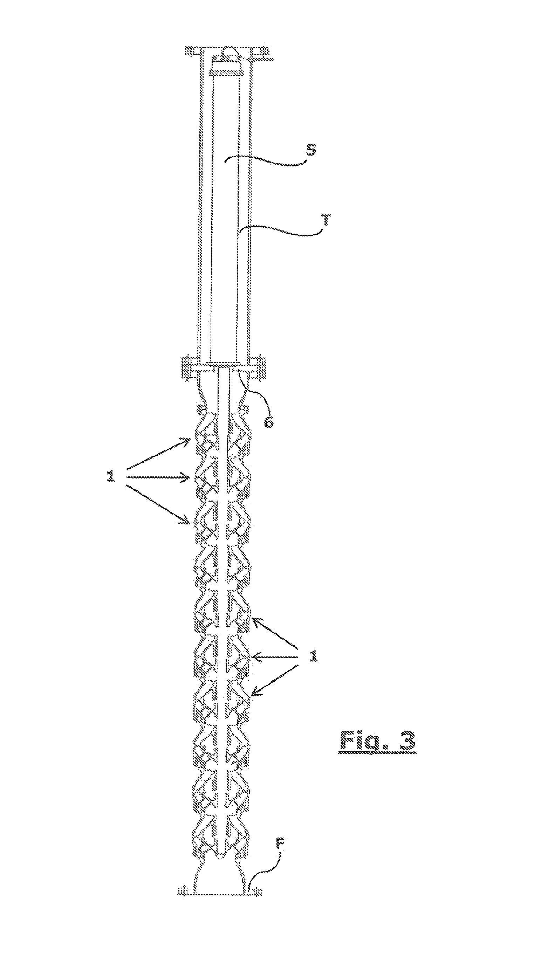

Thanks to this type of construction, it is possible to assemble in a single hydraulic turbine machine, a plurality of turbine members 1, arranged in series, for example as illustrated in the embodiment shown in Fig. 3, in which the discharge from an upstream turbine member feeds the downstream turbine member, thereby modulating, at will, the power of the machine and therefore that of generator 5, the dimensions of which will obviously vary proportionately to the number of turbine members 1 which are connected to it, as well as to the expected hydraulic load conditions.

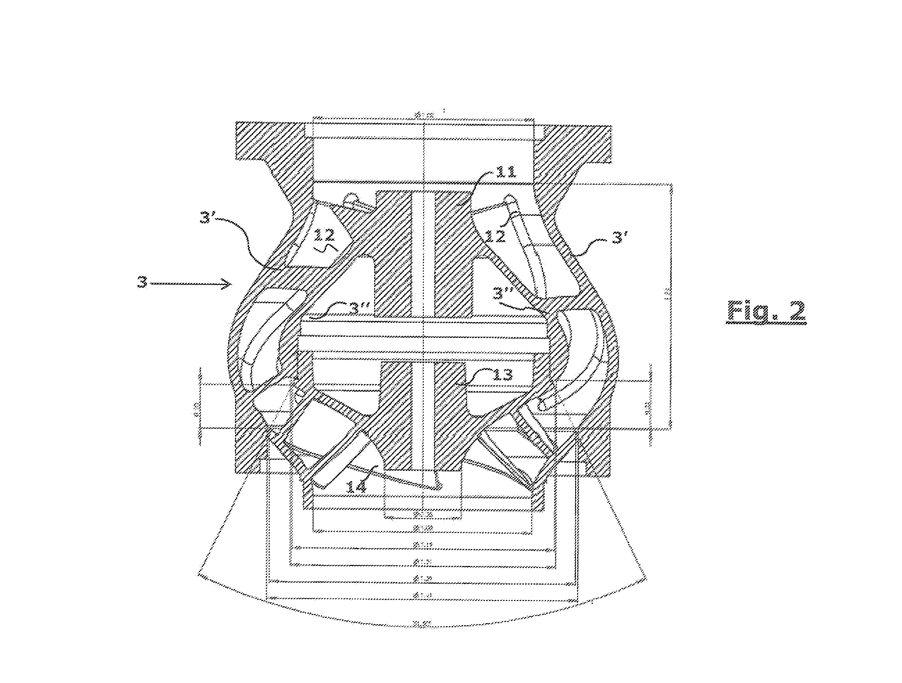

Fig. 2 illustrates a preferred embodiment of turbine member 1 of the invention, in greater detail. In this figure, one can clearly see how such a turbine member is of the "open" kind, where this term is used to define a turbine member which presents, at every point of both feeder 3 and rotor 2, very wide minimum liquid current passage sections, such as, for example, of the order of square centimetres, so that operation of the turbine member is not adversely affected by any medium-small solid substances which may be present (sand, earth, gravel, organic materials) which may be dragged along by the flow of liquid current. In order to avoid chemical corrosion problems, turbine member 1 should preferably be made of stainless steel or special steel alloys. In order to avoid abrasion of the walls of turbine member 1, on contact with the fluid current, such walls should preferably be protected by a suitable coating which, depending on the different uses of the machine, may be a coating of elastomeric material, a coating of plastic material or a superficial hardening treatment of the metallic material forming the turbine.

Feeder 3, which forms the entire external housing of turbine member 1, and which carries connection flanges 7 and 9, has a typical, bell-shaped conformation, with the trailing edge turned inwards towards the axis of the turbine member, comprising an external wall 3' and an internal wall 3", between which a divergent/convergent peripheral flow channel is formed. In an axial position, and fixed to internal wall 3" of the feeder, a hub 11 is provided, which supports shaft 4 of rotor 2 (the latter not shown in Fig. 2). Finally, inside the peripheral flow channel of feeder 3, a series of flow deflectors 12 is arranged, preferably eight in number, with a spiral conformation, which extend, wholly or partially, from external wall 3' to external wall 3" of feeder 3. Thanks to this conformation, the flow of liquid entering feeder 3 is diverted into an annular, peripheral zone, and obliged to follow a spiral path which is divergent to begin with, and then convergent again, so that on exit from the feeder, the flow of liquid is basically in a direction that is perpendicular to the blades of rotor 2 and already provided with a vortex movement in the direction of rotation of the rotor.

Rotor 2 also has a central hub 13, from which an internal wall 2" and an external wall 2' depart. The two walls 2' and 2" are interconnected by a series of blades 14, preferably being 5 in number, which receive the thrust of the flow of liquid leaving feeder 3 and release it into an axial flow downstream thereof. The span angle of turbine 2, in correspondence to its mouth opening, and therefore in the connection area with feeder 3, is preferably between 30º and 70º and preferably between 45º and 55º, in relation to the axis of turbine member 1, such an angle being important both with regard to the operational flexibility of the turbine and with regard to the ease with which suspended solid bodies are able to pass through the same.

Note, from this latter point of view, that the portion of turbine member 1 which presents the minimum passage width is in correspondence with the zone of maximum restriction of feeder 3, where the total section area of the feeder is equal to approximately 0.7 times the section area of its mouth, and where the minimum width for each liquid passage channel is equal to 1/8 of such a figure (being eight, as seen above, deflectors 12 which delimit such passage channels inside feeder 3). Conversely, in rotor 2 the passage section areas are wider than those of feeder 3, whereas the number of blades 14 is lower than that of deflectors 12, so that in no case does one find clogging or blockages of turbine 2 by solid bodies which have passed through feeder 3, this being highly beneficial to the safety of the machine.

In Fig. 2 are also shown the preferred size parameters for turbine member 1 of the present invention. For ease of reference, the said parameters are normalised based on the diameter of the inlet of the feeder which is made equal to 1, and they may present a preferred variability of ± 5% and an acceptable one of ± 15%. in which:
diameter of the feeder inlet = 1;
internal diameter of the feeder outlet = 1.21;
external diameter of the feeder outlet = 1.41;
height of the feeder outlet = 0.22;
diameter of the rotor hub = 0.35;
internal diameter of the rotor inlet = 1.19;
external diameter of the rotor inlet = 1.39;
height of the rotor inlet = 0.20;
span angle of the rotor inlet = 51.50°.

From the foregoing description, it should be clearly apparent that the turbine used for the turbine machine of the invention is of the mixed type. As a matter of fact, this turbine can be defined as a turbine with peripheral feed with controlled inclination, and axial discharge.

This particular turbine stucture, according to the research done by the Applicant, is in fact capable of achieving all the objects of the invention, and in particular that of a greater operational flexibility in a very wide flow rate range, without substantially varying its hydraulic performance, which is in the region of 80%. As already stated, a performance of this type is quite far from the maximum values obtainable in hydraulic machines which are designed according to a specific type of current, but it is an excellent performance for an extrememly versatile machine like the one which is proposed here, which is capable of providing respectable performances even with highly variable flow rates. Furthermore, the particular structural simplicity of the hydraulic turbine machine of the invention enables construction costs to be kept down, and, above all, installation costs are virtually negligible. That enables one to keep the maximum time for writing off of each new electric current generation plant based on such a machine within a maximum period of 5 years, and preferably 3 years.

Note, moreover, that the hydraulic machine of the present invention also offers the great advantage of perfect reversibility, a feature which is particularly appreciable when used for Civil Protection purposes. In fact, by giving generator 5 a suitable electric power supply, it is possible to use the hydraulic machine as a high-capacity drainage pump apt for dirty water too. It is obviously possible to combine, functionally, two hydraulic machines of the present invention, the first in generator mode, for the production of electric current, and the second in pump mode, powered by the current generated by the first.

However the in tention is not limited to the particular arrangement illustrated above, which is only an example of an embodiment thereof. Different variants are possible, all within the scope of a technician skilled in the art, without exceeding the scope of said invention, which is defined exclusively by the following claims.

## Claims

1. A fluidodynamic machine with tubed turbine, **characterised in that** it comprises, within one or more adjoining tubular elements (T), a turbine member (1), an electric generator (5) and a mechanical axis (4) connecting a rotor (2) of said turbine member (1) and said generator (5), and **in that** said turbine member is of the "open" type, and rotor (2) is of the peripheral feed type, with a span angle at its inlet of between 30º and 70º in relation to the axis of turbine member (1), and axial discharge.

2. A fluidodynamic machine as claimed in claim 1), wherein said turbine is housed within an independent tubular member (T).

3. A fluidodynamic machine as claimed in claim 1), comprising a plurality of turbine members (1) arranged coaxially in series, and all splined onto a single mechanical axis (4).

4. A fluidodyanmic machine as claimed in any of the previous claims, wherein said turbine member (1) comprises a stationary feeder (3) capable of diverting the feed flow into a convergent/divergent peripheral channel, apt to feed said rotor (2) with a liquid flow angle corresponding to said span angle of the inlet of rotor (2).

5. A fluidodynamic machine as claimed in claim 4), in which said span angle of the inlet of rotor (2) is within 45º and 55º.

6. A fluidodynamic machine as claimed in claims 4) or 5), in which the normalised parameters of said turbine member (1), in relation to the diameter of the relative inlet made equal to 1, are included within a range of ± 15% and preferably ± 5% of the following values:
diameter of feeder inlet = 1;
internal diameter of feeder outlet = 1.21;
external diameter of feeder outlet = 1.41;
height of feeder outlet = 0.22;
rotor hub diameter = 0.35;
internal diameter of rotor inlet = 1.19;
external diameter of rotor inlet = 1.39;
height of rotor inlet = 0.20.

7. Use of a fluidodynamic machine as claimed in any of the previous claims, as an electric generator in micro-plants with a power ranging between 1 and 250 kW.

8. Use of a fluidodynamic machine as claimed in any of the previous claims, as a drainage pump.

9. Use of a fluidodynamic machine as claimed in any of the previous claims, fixed to the bottom works of a water craft, as an onboard electric generator.
